# EUROPÄISCHE PATENTSCHRIFT

(11) **EP 0 588 013 B1**
(45) Veröffentlichungstag und Bekanntmachung des Hinweises auf die Patenterteilung: **15.07.1998**
(21) Anmeldenummer: 93111329.4
(22) Anmeldetag: 15.07.1993
(51) Int. Cl.: C08G 8/04, C09D 161/06, B24D 3/28

(54) **Wässrige Resollösung, Verfahren zu ihrer Herstellung und Verwendung**
Aqueous resole solution, process for its preparation and use
Solution aqueuse de résol, procédé pour sa préparation et utilisation

(30) Priorität: 17.09.1992 DE 4231039
(43) Veröffentlichungstag der Anmeldung: 23.03.1994
(73) Patentinhaber: Bakelite AG, 58642 Iserlohn-Letmathe (DE)
(72) Erfinder: Schröter, Stephan, D-5860 Iserlohn-Letmathe (DE); Gardziella, Arno, Dr., D-5810 Witten (DE); Hansen, Achim, Dr., D-5860 Iserlohn (DE); Adolphs, Peter, Dr., D-5750 Menden-Hallingen (DE)

(56) Entgegenhaltungen:
- DE-C- 599 990
- US-A- 4 052 359
- US-A- 4 904 516
- CHEMICAL ABSTRACTS, vol. 108, no. 16, 18. April 1988, Columbus, Ohio, US; abstract no. 132878, & JP-A-62 285 945 (ASAHI ORGANIC CHEMICALS IND. CO., LTD.) 11. Dezember 1987

## Beschreibung

Die Erfindung betrifft wasserarme, wäßrige Resollösungen mit niedrigem Phenolgehalt, die aber leicht mit Wasser verdünnbar sind. Derartige Lösungen werden vielfach als Lackierharze oder Bindeharze für Schleifmittel auf Unterlage benötigt, wobei der Harzhersteller eine Lösung mit möglichst hohem Festkörpergehalt herstellt, die vom Verarbeiter durch einfaches Vermischen mit Wasser auf die Anwendungskonzentration verdünnt wird.

Um dies zu ermöglichen, sind hohe Anforderungen an die Stabilität der Lösung zu stellen, d. h., es darf während der Lager- und Transportzeit der Harzlösung nicht zu Ausfällungen irgendwelcher Salze, Polymere oder Addukte kommen.

Resole werden durch Kondensation von phenolischen Verbindungen mit Aldehyden, insbesondere Formaldehyd in stark alkalischem Medium hergestellt. Nach Beendigung der Kondensationsreaktion wird das Reaktionsgemisch mit einer Säure, wie z. B. verd. HCl weitgehend neutralisiert (vergl. Ullmanns Enzyklopädie der techn. Chemie, 4. Aufl., Bd. 8, Seite 251). Anschließend werden Wasser und überschüssiges Phenol im Vakuum weitgehend abdestilliert, wobei hochkonzentrierte wäßrige Lösungen erhalten werden.

Um erhöhte Anforderungen hinsichtlich eines niedrigen Phenolgehaltes zu erfüllen, müssen anstelle der üblicherweise eingesetzten molaren Verhältnisse der phenolischen Verbindungen zu Aldehyd von 1 : 1 bis 1,5 Phenol-Aldehyd-Verhältnisse von 1 : 1,5 bis 1 : 2,5 eingesetzt werden.

Weiterhin muß, um für wäßrige Beschichtungssysteme geeignete hochkondensierte, monomerarme Resole zu erhalten, die üblicherweise bei der Kondensationsreaktion verwendete Alkalimenge von etwa 1,0 %, bezogen auf das Reaktionsgemisch bis auf etwa 3,5 % erhöht werden.

Daraus resultieren Salzausfällungen, wenn das Reaktionsgemisch neutralisiert und die Resollösungen aufkonzentriert werden, die zu Störungen und insbesondere beim Verdünnen der Konzentrate zu unerwünschten Inhomogenitäten der verdünnten Lösungen führen.

So sind zwar aus DE-C 599 990 Resole mit entsprechendem Phenol-Formaldehyd-Verhältnis und Alkaligehalt bekannt. Diese werden aber sofort nach der Kondensations reaktion durch Zugabe von Säure und Abdestillieren des Reaktionswassers geliert bzw. gehärtet. Eine stabile wäßrige Lösung wird dabei nicht erhalten.

Außerdem entstehen durch diese Kondensationsbedingungen Resole mit einem vermehrten Anteil an Methylolgruppen, die die Leistungsfähigkeit des gehärteten Harzes durch zu hohe Sprödigkeit herabsetzen. Die Wasserfestigkeit und die Korneinbindung werden ebenfalls wesentlich verschlechtert. Zudem bilden sich bei der Härtung monomerhaltige Emissionen, die Arbeitsschutzmaßnahmen und Abgasreinigungen erfordern.

Es ist somit Aufgabe der Erfindung, homogene, stabile Resollösungen mit niedrigem Phenolgehalt aber hohem Harzgehalt bereitzustellen, in denen keine Salzausfällungen erfolgen, die durch einfaches Vermischen mit Wasser in weitem Bereich verdünnbar sind, die bei der Härtung weniger Schadstoffemissionen freigeben und die nach der Härtung eine gute Korneinbindung und Wasserfestigkeit zeigen.

Die Lösung erfolgt durch Resollösungen gemäß der Ansprüche 1 bis 4 und durch ein Verfahren zu ihrer Herstellung gemäß der Ansprüche 5 bis 10. Die Resollösungen werden insbesondere als Lackharze oder Bindeharze für Schleifmittel auf Unterlage gemäß der Ansprüche 11 und 12 verwendet.

Es wurde gefunden, daß sich hochwertige, wäßrige Phenolresollösungen mit einem Gehalt an freiem Phenol von weniger als 1 % herstellen lassen, wenn bei der Herstellung die folgenden Merkmale erfüllt sind:
- Das molare Verhältnis phenolischer Verbindungen zu Aldehyd liegt im Bereich von 1 : 1,5 bis 2,5.
- Der Alkaligehalt der Reaktionslösung während der Kondensationsreaktion liegt im Bereich von 1,0 bis 5 Gew.-%, bevorzugt im Bereich von 1,5 bis 3,5 Gew.-%.
- Die Neutralisation der Reaktionslösung nach erfolgter Kondensation wird zumindest partiell mit einer aromatischen Hydroxycarbonsäure durchgeführt.
- Bei der Neutralisation wird eine Temperatur des Reaktionsgemisches von 50 °C nicht überschritten.

Bei den so hergestellten Resollösungen erfolgen auch nach starker Aufkonzentrierung keine Salzausfällung.

Es werden demnach homogene, stabile Resollösungen erhalten mit einem Harzgehalt bis zu 85 %. Die Lösungen sind durch einfaches Vermischen mit Wasser beliebig verdünnbar. Es ist ein weiterer Vorteil der erfindungsgemäß hergestellten Resollösungen, daß auch ihre Lagerstabilität in Bezug auf die Reaktivität der Harze wesentlich verbessert ist, so daß auch längere Transporte und Lagerzeiten ohne Beeinträchtigung der Harzqualität möglich sind.

Bei der Härtung der Harze sind die Emissionen von monomeren Substanzen stark reduziert, so daß im allgemeinen der Abgasreinigungsaufwand stark minimiert werden kann.

Nach der Trocknung der Resollösung und der thermischen Härtung des Resols wird ein Bindemittel mit hoher Wasserfestigkeit und guter Korneinbindung (bei Schleifmitteln) erhalten, das sich als Lackharz, aber insbesondere als Bindeharz für Schleifmittel auf Unterlage eignet. Somit werden durch die erfindungsgemäße Resollösung hochwertige Bindemittel für Schleifmittel auf Unterlage mit weitgehend monomerfreien Abgasemissionen bei der Härtung bereitgestellt.

Die Durchführung der Kondensationsreaktion erfolgt in an sich bekannter Weise durch mehrstündiges Erhitzen der Kondensationspartner in alkalischer, wäßriger Lösung. Als Kondensationspartner können alle für die Herstellung von Phenolharzen bekannten phenolischen Verbindungen und Aldehyde eingesetzt werden.

Phenolische Verbindungen sind insbesondere Phenol aber auch aliphatisch oder aromatisch substituierte Phenole, sowie mehrwertige Phenole. Beispiele hierfür sind Kresole, Xylenole, tert. Octylphenol, Naphthole, p-Phenylphenol, Bisphenole oder Resorcin aber auch Naturstoffe, wie z. B. Cardenol oder Cardol. Die phenolischen Verbindungen können als Einzelverbindungen oder im beliebigen Gemisch miteinander eingesetzt werden.

Als Aldehyde sind alle Verbindungen der allgemeinen Formel R-CHO einsetzbar. Beispiele sind Formaldehyd, Acet-, Propion-, n-Butyr- oder Isobutyr-aldehyd, Glyoxal oder Furfural.

Der bevorzugte Aldehyd ist Formaldehyd, der als solcher oder in Form einer Formaldehyd abspaltenden Substanz, wie z. B. Paraformaldehyd oder Trioxan eingesetzt wird. Die bevorzugte Zugabeform ist eine wäßrige Lösung mit einem Formaldehyd-Gehalt von mehr als 30 % (Formalin). Das molare Verhältnis der phenolischen Verbindung zu Aldehyd kann im Bereich von 1 : 1,5 bis 1 : 2,5 beliebig gewählt werden.

Die Alkalität des Kondensationsgemisches wird durch Zugabe von Alkalilauge, insbesondere von Natronlauge erreicht, wobei die Alkalimenge im Bereich von 1,0 bis 5 Gew.-%, insbesondere im Bereich von 1,5 bis 3,5 Gew.-% bezogen auf das gesamte Kondensationsgemisch, gewählt wird.

Nach beendeter Kondensationsreaktion kann das Kondensationsgemisch direkt neutralisiert werden. Im Hinblick auf einen vielfach gewünschten niedrigen Aldehydgehalt des Harzes wird das Kondensationsgemisch häufig einer Nachbehandlung mit Harnstoff unterworfen. Hierzu wird dem warmen Kondensationsgemisch Harnstoff in einer Menge von bis zu 10 Gew.-%, bezogen auf das Festharz, zugegeben und dieses Reaktionsgemisch nochmals 0,5 bis 2 h bei 50 bis 60 °C gehalten. Mitunter wird aus dem Reaktionsgemisch nach der Reaktion, bzw. nach der Harnstoffzugabe durch Vakuumdestillation bei 50 bis 60 °C überschüssiges Wasser abdestilliert. In diesen Fällen ist keine gesonderte thermische Behandlung des mit Harnstoff versetzten Reaktionsgemisches notwendig.

Das so von überschüssigem Aldehyd, insbesondere Formaldehyd befreite Reaktionsgemisch wird nach Abkühlung oder unter ständiger Kühlung bis zu einem pH-Wert von 6,5 bis 8,0 neutralisiert, wobei 50 bis 100 % der zu neutralisierenden Alkalimenge mit einer aromatischen Hydroxycarbonsäure neutralisiert werden. Bis zu 50 % der zu neutralisierenden Alkalimenge können mit einer anderen, aus dem Stand der Technik bekannten Säure, deren Alkalisalze leicht wasserlöslich sind, neutralisiert werden. Entscheidend für die Qualität des resultierenden nahezu neutralisierten Resols ist, daß die Temperatur des Reaktionsgemisches bei der Neutralisation 50 °C nicht übersteigt.

Außerdem hat es sich zur Erzielung einer homogenen Verteilung als zweckmäßig erwiesen, die Neutralisation stufenweise durchzuführen, so z. B. nach der Kondensation zunächst partiell unter Kühlung auf einen pH-Wert im Bereich von 11 bis 12 zu neutralisieren und nach einer Ruhephase von 10 bis 30 min. die Endneutralisation bis pH 6,5 bis 8,0 durchzuführen.

Bespiele für verwendbare aromatische Hydroxycarbonsäuren sind o-, m- und p-Hydroxybenzoesäure oder Gallussäure. Die bevorzugte Säure ist Salicylsäure.

### BEISPIELE

### Beispiel 1

522 g Phenol und 41,8 g 50 %ige Natronlauge werden vorgelegt und in einem mit Rührer versehenen Reaktionsgefäß auf 75 °C erhitzt. Innerhalb von 2 h werden 814 g 45 %iges Formalin zudosiert (Molverhältnis Phenol : Formaldehyd = 1 : 2,2) und die Temperatur so lange bei 75 °C gehalten (etwa 6 h) bis eine Wasserverdünnbarkeit von 10 : 60 ± 10 erreicht ist.

Der Ansatz wird auf 45 °C abgekühlt und unter Kühlen und Rühren mit 52 g Salicylsäure versetzt. Die Temperatur des Reaktionsgemisches liegt dabei immer unter 50 °C. Es stellt sich eine Wasserverdünnbarkeit von 10 : 20 ± 3 ein.

Das Harz wird im Vakuum auf eine Viskosität bei 20 °C von 3 500 mPa·s destilliert.

Das Harz hat nach 30 Tagen Lagerung bei 20 °C noch eine Viskosität bei 20 °C von weniger als 10 000 mPa·s.

### Beispiel 2

In einem mit Rührer versehenen Reaktionsgefäß werden 565 g Phenol und 67,8 g 50 %ige Natronlauge vorgelegt und auf 60 °C erwärmt. Innerhalb von 2,5 h werden 962 g 45 %iges Formalin zudosiert (Molverhältnis Phenol : Formaldehyd = 1 : 2,4) und die Temperatur des Reaktionsgemisches so lange bei 60 °C gehalten, bis der Gehalt an freiem Phenol bei 0,7 ± 0,1 % liegt. Dann werden 47,7 g Harnstoff zugegeben und das Gemisch 1 h bei 60 °C gehalten. Der Ansatz wird auf 45 °C gekühlt und unter Rühren und Kühlen mit 89,4 g Salicylsäure versetzt. Die Temperatur des Reaktionsgemisches liegt dabei immer unter 50 °C. Es stellt sich eine Wasserverdünnbarkeit von 10 : 30 ± 10 ein.

Das Harz wird im Vakuum auf eine Viskosität bei 20 °C 2 100 mPa·s destilliert.

### Beispiel 3 (Vergleichsbeispiel)

Analog zu Beispiel 2 wird ein Phenolharz hergestellt, jedoch ohne abschließende Teilneutralisation mit Salicylsäure.

**Eigenschaften der Harze gemäß der Beispiele 1 bis 3:**

| | Beispiel 1 | Beispiel 2 | Beispiel 3 |
|---|---|---|---|
| Nichtflüchtige Anteile bei 135 °C | 78,9 % | 74,8 % | 71,0 % |
| | | | |
| Viskosität bei 20 °C * | 3 500 mPa·s | 2 100 mPa·s | 2 200 mPa·s |
| | | | |
| Wasserverdünnbarkeit (trüb) | 10 : 20 | 10 : 41 | unendlich |
| | | | |
| Gelierzeit bei 100 °C | 44'20'' | 43'30'' | 29' 10'' |
| | | | |
| Gelierzeit bei 130 °C | 8'51'' | 8'45'' | 7'00'' |
| | | | |
| Gehalt an fr. Phenol | 0,8 % | 0,5 % | 0,6 % |
| | | | |
| Gehalt an fr. Formaldehyd | 2,2 % | 0,9 % | 0,6 % |
| | | | |
| Alkalizahl ** | 16,3 | 18,8 | 64,1 |
| | | | |
| Alkaligehalt | 0,65 % | 0,75 % | 2,56 % |
| | | | |
| pH-Wert bei 20 °C | 8,58 | 8,6 | 9,4 |
| | | | |
| Wassergehalt | 14 % | 20 % | 23 % |

| | | | |
|---|---|---|---|
| * Kugelfallviskosimeter | | | |
| ** ml HCl/100 g bei Titration auf pH 5 in Aceton/Wasser-Gemisch | | | |

**Viskosität bei 20 °C nach Lagerung bei 20 °C:**

| Zeit | Harz nach Beispiel 2 | Harz nach Beispiel 3 |
|---|---|---|
| [d] | Viskosität bei 20 °C [mPa·s] | Viskosität bei 20 °C [mPa·s] |
| 0 | 2 100 | 2 200 |
| 6 | 3 040 | 2 880 |
| 9 | 2 960 | 3 120 |
| 13 | 3 440 | 3 520 |
| 16 | 3 480 | 3 840 |
| 20 | 4 120 | 4 720 |
| 23 | 4 200 | 4 900 |
| 27 | 5 280 | 5 500 |
| 41 | 7 360 | 11 520 |
| 45 | 8 800 | 17 000 |
| 49 | 9 280 | 21 000 |
| 52 | 10 880 | 25 000 |
| 66 | 18 560 | 40 000 |
| 72 | 24 960 | 70 000 |
| 97 | 79 360 | ----- |

### Beispiel 4

Nach folgendem Verfahren werden mit den Harzen gemäß der Beispiele 1 bis 3 jeweils Schleifmittel auf Unterlage hergestellt und die Schleifleistung in einem Praxistest beurteilt:

Die Harze werden mit Füllstoff (Kreide) und Wasser versetzt. Mittels Walzenauftrag wird der Grundlack auf Natronkraftpapier appliziert und das Schleifkorn (Elektrokorund, SiC) anschließend nach dem elektrostatischen Streuverfahren aufgebracht. Nach der Anhärtung (100 °C) erfolgt der Auftrag des Decklackes zur Fixierung des Korns. Die Endaushärtung erfolgt bei 100 bis 140 °C. Nach dem Flexvorgang wird die Schleifleistung beurteilt.

### Grundlack:

- Harze nach den Beispielen 1 bis 3: = 55 Teile
- Calciumcarbonat: = 40 Teile
Mit Wasser wird eine Viskosität von 3 000 mPa·s (bei 20 °C) eingestellt. Auftrag: 200 bis 250 g/m²

### Schleifkorn:

Korn 60 : 470 g/m²

### Decklack:

Rezeptur wie Grundlack.

Die mit Harzen gemäß der Beispiele 1 und 2 hergestellten Schleifmittel zeigen (auch nach mehrmonatiger Lagerung) eine Schleifleistung, die der konventionell hergesteller Schleifmittel auf Unterlage entspricht. Jedoch ist die Emissionsbelastung sowohl beim Härtungs- als auch beim Schleifvorgang wesentlich vermindert.

Die Schleifleistung des mit Harz gemäß Beispiel 3 hergestellten Schleifmittels entspricht nicht den Anforderungen. Insbesondere nach etwa 14-tägiger Lagerung der Schleifmittel (mit Harz aus Beispiel 3) ist die Schleifleistung gravierend abgesunken. Die Schleifmittel sind nicht brauchbar.

## Patentansprüche

1. Wäßrige Resollösungen, hergestellt durch alkalische Kondensation von phenolischen Verbindungen mit Aldehyden und anschließend Neutralisation und Aufkonzentrierung des Reaktionsgemisches, **dadurch gekennzeichnet**, daß bei der Herstellung phenolischer Verbindungen und Aldehyd im molaren Verhältnis 1 : 1,5 bis 2,5 eingesetzt werden, der Alkaligehalt der Reaktionslösung im Bereich von 1,0 bis 5 Gew.-% liegt, daß die Neutralisation der Reaktionslösung nach erfolgter Kondensation zumindest partiell mit einer aromatischen Hydroxycarbonsäure erfolgt und bei der Neutralisation eine Temperatur des Reaktionsgemisches von 50 °C nicht überschritten wird.

2. Resollösungen nach Anspruch 1, **dadurch gekennzeichnet**, daß sie durch Kondensation von Phenol mit Formaldehyd hergestellt wird.

3. Resollösungen nach Anspruch 1 oder 2, **dadurch gekennzeichnet**, daß die teilweise Neutralisation mit Salicylsäure durchgeführt wird.

4. Resollösungen nach einem der Ansprüche 1 bis 3, **dadurch gekennzeichnet**, daß das Kondensationsprodukt vor der Neutralisation mit Harnstoff modifiziert wurde.

5. Verfahren zur Herstellung wäßriger Resollösungen nach den Ansprüchen 1 bis 4, **dadurch gekennzeichnet**, daß phenolische Verbindungen und Aldehyd im molaren Verhältnis 1 : 1,5 bis 2,5 miteinander kondensiert werden, der Alkaligehalt der Reaktionslösung im Bereich von 1,0 bis 5 Gew.-% liegt, die Neutralisation zumindest partiell mit einer aromatischen Hydroxycarbonsäure erfolgt und bei der Neutralisation eine Temperatur des Reaktionsgemisches von 50 °C nicht überschritten wird.

6. Verfahren nach Anspruch 5, **dadurch gekennzeichnet**, daß Phenol und Formaldehyd kondensiert werden.

7. Verfahren nach den Ansprüchen 5 und 6, **dadurch gekennzeichnet**, daß dem Kondensationsgemisch nach der Kondensationsreaktion bis zu 10 Gew.-% Harnstoff, bezogen auf den Festgehalt zugegeben werden, daß so erhaltene Reaktionsgemisch 0,5 bis 2 h bei einer Temperatur von 50 bis 60 °C gehalten wird und erst danach neutralisiert wird.

8. Verfahren nach einem der Ansprüche 5 bis 7, **dadurch gekennzeichnet**, daß als aromatische Hydroxycarbonsäure Salicylsäure verwendet wird.

9. Verfahren nach einem der Ansprüche 5 bis 8, **dadurch gekennzeichnet**, daß 50 bis 100 % der zu neutralisierenden Alkalimenge mit einer aromatischen Hydroxycarbonsäure neutralisiert werden.

10. Verfahren nach den Ansprüchen 5 bis 9, **dadurch gekennzeichnet**, daß die Neutralisation stufenweise erfolgt.

11. Verwendung der Resollösungen gemäß der Ansprüche 1 bis 4 als wasserverdünnbare Lackharze.

12. Verwendung der Resollösungen gemäß der Ansprüche 1 bis 4 als Bindeharze für Schleifmittel auf Unterlage.

## Claims

1. Aqueous resol solutions, prepared by alkaline condensation of phenol compounds with aldehydes and then neutralization and concentration of the reaction mixture, **characterized in that** during the preparation phenol compounds and aldehyde are used in a molar ratio of 1 : 1.5 to 2.5, the alkali content of the reaction solution is in the range of from 1.0 to 5% by weight, the neutralization of the reaction solution takes place at least partially with an aromatic hydroxycarboxylic acid after the condensation has taken place, and during the neutralization a temperature of the reaction mixture of 50°C is not exceeded.

2. Resol solutions according to Claim 1, **characterized in that** they [are] prepared by condensation of phenol with formaldehyde.

3. Resol solutions according to Claim 1 or 2, **characterized in that** the partial neutralization is performed with salicylic acid.

4. Resol solutions according to one of Claims 1 to 3, **characterized in that** the condensation product has been modified with urea before neutralization.

5. A process for preparing aqueous resol solutions according to Claims 1 to 4, **characterized in that** phenol compounds and aldehyde are condensed in a molar ratio of 1 : 1.5 to 2.5 to each other, the alkali content of the reaction solution is in the range of from 1.0 to 5% by weight, the neutralization takes places at least partially with an aromatic hydroxycarboxylic acid, and during the neutralization a temperature of the reaction mixture of 50°C is not exceeded.

6. A process according to Claim 5, **characterized in that** phenol and formaldehyde are condensed.

7. A process according to Claims 5 and 6, **characterized in that** up to 10% by weight of urea, relative to the solids content, is added to the condensation mixture after the condensation reaction, the reaction mixture obtained in this way is kept for 0·5 to 2 h at a temperature of from 50 to 60°C and is neutralized only thereafter.

8. A process according to one of Claims 5 to 7, **characterized in that** salicylic acid is used as an aromatic hydroxycarboxylic acid.

9. A process according to one of Claims 5 to 8, **characterized in that** from 50 to 100% of the quantity of alkali to be neutralized is neutralized with an aromatic hydroxycarboxylic acid.

10. A process according to Claims 5 to 9, **characterized in that** the neutralization takes place in stages.

11. Use of the resol solutions according to Claims 1 to 4 as water-dilutable varnish resins.

12. Use of the resol solutions according to Claims 1 to 4 as binding resins for abrasives on an underlay.

## Revendications

1. Solutions de résols aqueuses, préparées par condensation alcaline de composés phénoliques avec des aldéhydes et ensuite par neutralisation et concentration du mélange réactionnel, caractérisées en ce que, pour la préparation, des composés phénoliques et un aldéhyde sont mis en oeuvre dans le rapport molaire de 1:1,5 à 2,5, que la teneur en alcali de la solution réactionnelle se situe dans la gamme de 1,0 à 5% en poids, que la neutralisation de la solution réactionnelle à l'issue de la condensation a lieu au moins en partie avec un acide hydroxycarboxylique aromatique et que pour la neutralisation, on ne dépasse pas une température du mélange réactionnel de 50°C.

2. Solutions de résols selon la revendication 1, caractérisées en ce qu'elles sont préparées par condensation de phénol avec du formaldéhyde.

3. Solutions de résols selon la revendication 1 ou 2, caractérisées en ce que la neutralisation partielle est réalisée avec de l'acide salicylique.

4. Solutions de résols selon l'une des revendications 1 à 3, caractérisées en ce que le produit de condensation a été modifié, avant la neutralisation, avec de l'urée.

5. Procédé de préparation de solutions de résols aqueuses selon les revendications 1 à 4, caractérisé en ce que des composés phénoliques et un aldéhyde sont condensés ensemble dans un rapport molaire de 1:1,5 à 2,5, que la teneur en alcali de la solution réactionnelle se situe dans la gamme de 1,0 à 5% en poids, que la neutralisation a lieu avec au moins en partie un acide hydroxycarboxylique aromatique et que pour la neutralisation, on ne dépasse pas une température du mélange réactionnel de 50°C.

6. Procédé selon la revendication 5, caractérisé en ce que l'on condense du phénol et du formaldéhyde.

7. Procédé selon les revendications 5 et 6, caractérisé en ce que l'on ajoute au mélange de condensation, après la réaction de condensation, jusqu'à 10% en poids d'urée par rapport aux taux de solides, que le mélange réactionnel ainsi obtenu est maintenu pendant 0,5 à 2 h à une température de 50 à 60°C et qu'après cela seulement on neutralise.

8. Procédé selon l'une des revendications 5 à 7, caractérisé en ce que de l'acide salicylique est utilisé en tant qu'acide hydroxycarboxylique aromatique.

9. Procédé selon l'une des revendications 5 à 8, caractérisé en ce que 50 à 100% de la quantité d'alcali à neutraliser sont neutralisés avec un acide hydroxycarboxylique aromatique.

10. Procédé selon l'une des revendications 5 à 9, caractérisé en ce que la neutralisation a lieu par paliers.

11. Utilisation des solutions de résols selon les revendications 1 à 4 comme résines pour peintures diluables à l'eau.

12. Utilisation des solutions de résols selon les revendications 1 à 4 comme résines de liaison pour abrasifs appliqués sur supports.
